(19) Europäisches Patentamt
European Patent Office
Office européen des brevets

(11) Publication number: **0 129 996**
**A2**

(12) # EUROPEAN PATENT APPLICATION

(21) Application number: 84303758.1

(22) Date of filing: 04.06.84

(51) Int. Cl.[4]: B 41 J 5/10

(30) Priority: 04.06.83 JP 99791/83

(43) Date of publication of application: 02.01.85 Bulletin 85/1

(84) Designated Contracting States: DE GB IT

(71) Applicant: Gakkohojin Kawaguchigakuen
10-12, Takada 3-chome Toshima-ku
Tokyo(JP)

(72) Inventor: Shibata, Kunihiro
154-2, Ominami 1-chome Musahimurayama-shi
Tokyo(JP)

(74) Representative: White, Martin David et al,
Marks & Clerk 57/60 Lincoln's Inn Fields
London WC2A 3LS(GB)

(54) **Character inputting method.**

(57) The invention provides a character inputting method and apparatus for making it possible to input not more than 30 characters in small letters of English characters, French characters, German characters, Spanish characters, Italian characters and the like by using 13 keyswitches (5L-14R, 15L, R, 16) at least.

EP 0 129 996 A2

Croydon Printing Company Ltd

M&C FOLIO: 799P48299 WANGDOC: 0115k

# CHARACTER INPUTTING METHOD

The invention relates to a method of and apparatus for inputting characters, etc. to a character-user apparatus or output unit such as a typewriter or a computer, etc. by operating keyswitches of a keyboard.

Up to now, inputting of characters in an English character typewriter, etc. is done by using keyswitches, the number of which is not less than the number of English characters etc. and therefore the following faults or disadvantages arise:

(1) As the number of keyswitches is many, quick operation of keys cannot be expected;

(2) As keyswitch operation requires motions of not only fingertips but also arms, it becomes heavy and tiresome work for an operator;

(3) The number of keyswitches make the operation unit excessively large;

(4) The numbers of keyswitches also make it expensive;

(5) An interchange operation between a capital letter and a small letter (that is "lower case" letter) is troublesome;

(6) It takes much time for the operator to learn the key-position by heart because of the number of keyswitches;

(7) The number of keyswitches cause a number of errors in the inputting.

It is a principal object of the invention to provide a character inputting method and apparatus for making it possible to input such characters as English characters, etc. which is consisting of not more than 30 characters in small letters by using of 13 keyswitches at least.

A further object of the invention is to provide a character inputting method and apparatus for making it virtually possible to perform an input operation by handling the keyswitches arranged left and right on the keyboard under the conditions of keeping fingers of both hands in a "Home Position".

Still a further object of the invention is to provide a character inputting apparatus which is simple in construction and low in price.

BAD ORIGINAl

The invention will be described by way of example with reference to the accompanying drawings, wherein:-

Fig. 1 is a block diagram of an example of the invention;

Fig. 2 is a system diagram embodying an arithmetic and storage unit of Fig. 1;

Fig. 3 is a diagram showing an input control unit and an encoder.

Figures 4, 5, 6, 7 and 8 are diagrams showing the different examples of an input control unit.

Referring to Figs. 1 to 3, an "input control unit" 1 is provided for inputting English characters. On a frame 1A of the "input control unit" 1, five "character inputting keyswitches" (left)-5L, 6L, 7L, 8L and 9L are arranged in a row on the left-hand side and five "character inputting keyswitches" (right)-10R, 11R, 12R, 13R and 14R are arranged in a row on the right-hand side. The top surface of each of the "character inputting keyswitches" is raised above the top surface of the frame 1A. Each of the "character inputting keyswitches" has a "first position" 2, a "second position" 3 and a "third position" 4. In this example, the "first position" 2 is the upper position. The "second position" 3 the middle position, and the "third position" 4 the lower position on the top surface of each of the "character inputting keyswitches".

In the "first position" 2, the "second position" 3 and the "third position" 4 of the "character inputting keyswitch" (left) 5L, English characters-"Q", "A" and "Z" and symbols and a numeral-"~", "1" and "+" are printed in rows.

In the "first position" 2, the "second position" 3 and the "third position" 4 of the "character inputting keyswitch" (left) 6L, English characters-"W", "S" and "X" and symbols and a numeral-"@", "2" and "-" are printed in rows.

In the "first position" 2, the "second position" 3 and the "third position" 4 of the "character inputting keyswitch" (left) 7L, English characters-"E" "D" and "C" and symbols and a numeral-"#", "3" and "x" are printed in rows.

In the "first position" 2, the "second position" 3 and the "third position" 4 of the "character inputting keyswitch" (left) 8L, English characters-"R", "F" and "V" and symbols and a numeral-"$", "4" and "÷" are printed in rows.

In the "first position" 2, the "second position" 3 and the "third position" 4 of the "character inputting keyswitch" (left) 9L, English characters-"T", "G" and "B" and symbols and a numeral-"%", "5" and "=" are printed in rows.

In the "first position" 2, the second position" 3 and the "third position" 4 of the "character inputting keyswitch" (right) 10R, English characters-"Y", "H" and "N" and a symbol and numerals-"¢", "6" and "1/2" are printed in rows.

In the "first position" 2, the "second position" 3 and the "third position" 4 of the "character inputting keyswitch" (right) 11R, English characters-"U", "J" and "M" and a symbol and numerals-"&", "7" and "1/4" are printed in rows.

In the "first position" 2, the "second position" 3 and the "third position" 4 of the "character inputting keyswitch" (right) 12R, English characters-"I", "K" and "'" and symbols and a numeral "*" "8" and ":" are printed in rows.

In the "first position" 2, the "second position" 3 and the "third position" 4 of the "character inputting keyswitch" (right) 13R, English characters-"O", "L" and "〃" and symbols and a numeral "(", "9" and "[" are printed in rows.

In the "first position" 2, the "second position" 3 and the "third position" 4 of the "character inputting keyswitch" (right) 14R, English characters-"P", ";" and "!" and symbols and a numeral-")", "0" and "]" are printed in rows.

15L and 15R indicate the "first position keyswitches" (left and right) located left and right below the row(s) of the "character inputting keyswitches" (left)-5L, 6L, 7L, 8L and 9L and the "character inputting keyswitches" (right)-10R, 11R, 12R, 13R and 14R on the frame 1A of the "input control unit"1 which are used not only for inputting characters, etc. printed in the location of the "first position"2 of the "character inputting keyswitches" (left)-5L, 6L, 7L, 8L and 9L and "character inputting keyswitches" (right) -10R, 11R, 12R, 13R and 14R but as a "tabulating keyswitch" or a "spacing keyswitch".

16 indicates a "third position keyswitch" located between the "first position keyswitches" (left and right) 15L and 15R below the row(s) of the "character inputting keyswitches" (left)-5L, 6L, 7L, 8L and 9L and the "character inputting keyswitches" (right)-10R, 11R, 12R, 13R and 14R on the frame 1A of the "input control unit"1 and used not only for inputting characters, etc. printed in the location of the "third position"4 of the "character inputting keyswitches" (left)-5L, 6L, 7L, 8L and 9L and the "character inputting keyswitches" (right)-10R, 11R, 12R, 13R and 14R but as a "changeover keyswitch for numerals and symbols".

17 indicates an "arithmetic and storage unit" which stores a key input entered from the "input control unit"1 and outputs the processed data to an "output unit"18 such as a printing unit (for a word processor, a computer and the like) and a perforator (for

preparation of a perforated tape).

As illustrated in Fig. 2, the "arithmetic and storage unit" 17 consists of:

a "CPU" (central processing unit) 19;

an "encoder" 20 connected with the "CPU" (central processing unit) 19 for making a code conversion of key input signals from the "input control unit" 1;

a "ROM" (read only memory) 21; and

an "output key data processing unit" 22 to which signals from the "encoder" 20 and signals from "ROM" (read-only memory) 21 connected with the "CPU" 19 are inputted and the processed data therefrom are outputted to the "output unit" 18.

As illustrated in Fig. 3, the "encoder" 20 is composed of the following:

(1) A circuit 25 for inputting a character"a" which is connected between the "character inputting keyswitch" (left) 5L and an "analog-digital conversion unit" 24 through a "latch circuit" 23,

(2) A circuit 27 for inputting a character "q" which is connected to the "analog-digital conversion unit" 24 through an "AND gate" 26 which outputs only in case of receiving simultaneous signals from the "character inputting keyswitch" (left) 5L and the "first position keyswitch" (left) 15L.

(3) A circuit 29 for inputting a character "z" which is connected to the "analog-digital conversion unit" 24 through an "AND gate" 28 which outputs only in case of receiving simultaneous signals from the "character inputting keyswitch" (left) 5L and the "third position keyswitch" 16.

(4) A circuit 31 for inputting a character "A" which is connected to the "analog-digital conversion unit" 24 through an "AND gate" 30 which outputs only in case of receiving simultaneous signals from the "character inputting keyswitch" (left) 5L and the "first position keyswitch" (right) 15R.

(5) A circuit 33 for inputting a character "Q" which is connected to the "analog-digital conversion unit" 24 through "AND gates" 26 and 32 which output only in case of receiving simultaneous signals from the "character inputting keyswitch" (left) 5L and the "first position keyswitches" (left and right) 15L and 15R.

(6) A circuit 35 for inputting a character "Z" which is connected to the "analog-digital conversion unit" 24 through "AND gates" 28 and 34 which output only in case of receiving simultaneous signals from the "character inputting keyswitch" (left) 5L, the "third position keyswitch" 16 and the "first position keyswitch" (right) 15R.

(7) A circuit 37 for inputting a character "s" which is connected between the "character inputting keyswitch"(left)6L and the "analog-digital conversion unit"24 through a "latch circuit"36.

(8) A circuit 39 for inputting a character "w" which is connected to the "analog-digital conversion unit"24 through an "AND gate"38 which outputs only in case of receiving simultaneous signals from the "character inputting keyswitch"(left)6L and the "first position keyswitch"(left)15L.

(9) A circuit 41 for inputting a character "x" which is connected to the "analog-digital conversion unit"24 through an "AND gate"40 which outputs only in case of receiving simultaneous signals from the "character inputting keyswitch (left) 6L and the "third position keyswitch"16.

(10) A circuit 43 for inputting a character "S" which is connected to the "analog-digital conversion unit"24 through an "AND gate"42 which outputs only in case of receiving simultaneous signals from the "character inputting keyswitch"(left)6L and the "first position keyswitch"(right)15R.

(11) A circuit 45 for inputting character "W" which is connected to the "analog-digital conversion unit"24 through "AND gates"38 and 44 which output only in case of receiving simultaneous signals from the "character inputting keyswitch"(left)6L and the "first position keyswitches" (left and right) 15L and 15R.

(12) A circuit 47 for inputting character "X" which is connected to the "analog-digital conversion unit" 24 through "AND gates" 40 and 46 which output only in case of receiving simultaneous signals from the "character inputting keyswitch" (left) 6L, the "third position keyswitch" 16 and the "first position keyswitch" (right) 15R.

(13) A circuit 49 for inputting a character "d" which is connected between the "character inputting keyswitch" (left) 7L and the "analog-digital conversion unit" 24 through a "latch circuit" 48.

(14) A circuit 51 for inputting a character "e" which is connected to the "analog-digital conversion unit" 24 through an "AND gate" 50 which outputs only in case of receiving simultaneous signals from the "character inputting keyswitch" (left) 7L and the "first position keyswitch" (left) 15L.

(15) A circuit 53 for inputting a character "c" which is connected to the "analog-digital conversion unit" 24 through an "AND gate 52" which outputs only in case of receiving simultaneous signals from the "character inputting keyswitch" (left) 7L and the "third position keyswitch" 16.

(16) A circuit 55 for inputting a character "D" which is connected to the "analog-digital conversion unit" 24 through an "AND gate" 54 which outputs only in case of receiving simultaneous signals from the "character inputting keyswitch" (left) 7L and the "first position keyswitch" (right) 15R.

(17) A circuit 57 for inputting a character "E" which is connected to the "analog-digital conversion unit" 24 through "AND gates" 50 and 56 which output only in case of receiving simultaneous signals from the "character inputting keyswitch" (left) 7L and the "first position keyswitches" (left and right) 15L and 15R.

(18) A circuit 59 for inputting a character "C" which is connected to the "analog-digital conversion unit" 24 through "AND gates" 52 and 58 which output only in case of receiving simultaneous signals from the "character inputting keyswitch" (left) 7L, the "third position keyswitch" 16 and the "first position keyswitch" (right) 15R.

(19) A circuit 61 for inputting a character "f" which is connected between the "character inputting keyswitch" (left) 8L and the "analog-digital conversion unit" 24 through a "latch circuit" 60.

(20) A circuit 63 for inputting a character "r" which is connected to the "analog-digital conversion unit" 24 through an "AND gate" 62

which outputs only in case of receiving simultaneous signals from the "character inputting keyswitch" (left) 8L and the "first position keyswitch" (left) 15L.

(21) A circuit 65 for inputting a character "v" which is connected to the "analog-digital conversion unit" 24 through an "AND gate" 64 which outputs only in case of receiving simultaneous signals from the "character inputting keyswitch" (left) 8L and the "third position keyswitch" 16.

(22) A circuit 67 for inputting a character "F" which is connected to the "analog-digital conversion unit" 24 through an "AND gate" 66 which outputs only in case of receiving simultaneous signals from the "character inputting keyswitch" (left) 8L and the "first position keyswitch" (right) 15R.

(23) A circuit 69 for inputting a character "R" which is connected to the "analog-digital conversion unit" 24 through "AND gates" 62 and 68 which output only in case of receiving simultaneous signals from the "character inputting keyswitch" (left) 8L and the "first position keyswitches" (left and right) 15L and 15R.

(24) A circuit 71 for inputting a character "V" which is connected to the "analog-digital conversion unit" 24 through "AND gates" 64 and 70 which output only in case of receiving simultaneous signals from the "character inputting keyswitch" (left) 8L, the "third position keyswitch" 16 and the "first position keyswitch" (right) 15R.

(25) A circuit 73 for inputting a character "g" which is connected between the "character inputting keyswitch" 9L and the "analog-digital conversion unit" 24 through a "latch circuit" 72.

(26) A circuit 75 for inputting a character "t" which is connected to the "analog-digital conversion unit" 24 through an "AND gate" 74 which outputs only in case of receiving simultaneous signals from the "character inputting keyswitch" (left) 9L and the "first position keyswitch" (left) 15L.

(27) A circuit 77 for inputting a character "b" which is connected to the "analog-digital conversion unit" 24 through an "AND gate" 76 which outputs only in case of receiving simultaneous signals from the "character inputting keyswitch" (left) 9L and the "third position keyswitch" 16.

(28) A circuit 79 for inputting a character "G" which is connected to the "analog-digital conversion unit" 24 through an "AND gate" 78 which outputs only in case of receiving simultaneous signals from the "character inputting keyswitch" (left) 9L and the "first position keyswitch" (right) 15R.

(29) A circuit 81 for inputting a character "T" which is connected to the "analog-digital conversion unit"24 through "AND gates"74 and 80 which output only in case of receiving simultaneous signals from the "character inputting keyswitch"(left) 9L and the "first position keyswitches"(left and right) 15L and 15R.

(30) A circuit 83 for inputting a character "B" which is connected to the "analog-digital conversion unit"24 through "AND gates" 76 and 82 which output only in case of receiving simultaneous signals from the "character inputting keyswitch"(left) 9L, the "third position keyswitch" 16 and the "first position keyswitch"(right)15R.

(31) A circuit 85 for inputting a character "h" which is connected between the "character inputting keyswitch"(right) 10R and the "analog-digital conversion unit"24 through a "latch circuit" 84.

(32) A circuit 89 for inputting a character "y" which is connected to the "analog-digital conversion unit"24 through an "AND gate" 88 which outputs only in case of receiving simultaneous signals from the "character inputting keyswitch"(right) 10R and the "first position keyswitch"(right) 15R.

(33) A circuit 87 for inputting a character "n" which is connected to the "analog-digital conversion unit" 24 through an "AND gate" 86 which outputs only in case of receiving simultaneous signals from the "character inputting keyswitch" (right) 10R and the "third position keyswitch" 16.

(34) A circuit 91 for inputting a character "H" which is connected to the "analog-digital conversion unit" 24 through an "AND gate" 90 which outputs only in case of receiving simultaneous signals from the "character inputting keyswitch" (right) 10R and the "first position keyswitch" (left) 15L.

(35) A circuit 93 for inputting a character "Y" which is connected to the "analog-digital conversion unit" 24 through "AND gates" 88 and 92 which output only in case of receiving simultaneous signals from the "character inputting keyswitch" (right) 10R and the "first position keyswitches" (left and right) 15L and 15R.

(36) A circuit 95 for inputting a character "N" which is connected to the "analog-digital conversion unit" 24 through "AND gates" 86 and 94 which output only in case of receiving simultaneous signals from the "character inputting keyswitch" (right) 10R, the "third position keyswitch" 16 and the "first position keyswitch" (left) 15L.

(37) A circuit 97 for inputting a character "j" which is connected between the "character

inputting keyswitch" (right) 11R and the "analog-digital conversion unit" 24 through a "latch circuit" 96.

(38) A circuit 101 for inputting a character "u" which is connected to the "analog-digital conversion unit" 24 through an "AND gate" 100 which outputs only in case of receiving simultaneous signals from the "character inputting keyswitch" (right) 11R and the "first position keyswitch" (right) 15R.

(39) A circuit 99 for inputting a character "m" which is connected to the "analog-digital conversion unit" 24 through an "AND.gate" 98 which outputs only in case of receiving simultaneous signals from the "character inputting keyswitch" (right) 11R and the "third position keyswitch" 16.

(40) A circuit 103 for inputting a character "J" which is connected to the "analog-digital conversion unit" 24 through an "AND gate" 102 which outputs only in case of receiving simultaneous signals from the "character inputting keyswitch" (right) 11R and the "first position keyswitch" (left) 15L.

(41) A circuit 105 for inputting a character "U" which is connected to the "analog-digital conversion unit" 24 through "AND gates" 100 and 104 which output only in case of receiving simultaneous signals from the "character inputting kewyswitch" (right) 11R and the "first position keyswitches" (left and right) 15L and 15R.

(42) A circuit 107 for inputting a character "M" which is connected to the "analog-digital conversion unit" 24 through "AND gates" 98 and 106 which output only in case of receiving simultaneous signals from the "character inputting keyswitch" (right) 11R, the "third position keyswitch" 16 and the "first position keyswitch" (left) 15L.

(43) A circuit 109 for inputting a character "k" which is connected between the "character inputting keyswitch" (right) 12R and the "analog-digital conversion unit" 24 through a "latch circuit" 108.

(44) A circuit 113 for inputting a character "i" which is connected to the "analog-digital conversion unit" 24 through an "AND gate" 112 which outputs only in case of receiving simultaneous signals from the "character inputting keyswitch" (right) 12R and the "first position keyswitch" (right) 15R.

(45) A circuit 111 for inputting a character "," which is connected to the "analog-digital conversion unit" 24 through an "AND gate" 110 which outputs only in case of receiving simultaneous signals from the "character inputting keyswitch" (right) 12R and the "third position keyswitch" 16.

(46) A circuit 115 for inputting a character "K"

which is connected to the “analog-digital conversion unit”24 through an “AND gate”114 which outputs only in case of receiving simultaneous signals from the “character inputting keyswitch”(right) 12R and the “first position keyswitch”(left)15L.

(47) A circuit 117 for inputting a character “I” which is connected to the “analog-digital conversion unit”24 through “AND gates”112 and 116 which output only in case of receiving simultaneous signals from the “character inputting keyswitch”(right) 12R and the “first position keyswitches”(left and right)15L and 15R.

(48) A circuit 119 for inputting a character “' ” which is connected to the “analog-digital conversion unit”24 through “AND gates” 110 and 118 which output only in case of receiving simultaneous signals from the “character inputting keyswitch”(right)12R, the “third position keyswitch”16 and the “first position keyswitch”(left) 15L.

(49) A circuit 121 for inputting a character “I” which is connected between the “character inputting keyswitch”(right)13R and the “analog -digital conversion unit”24 through a “latch circuit”120.

(50) A circuit 125 for inputting a character “o” which is connected to the “analog-digital conversion unit”24 through an “AND gate”124 which outputs only in case of receiving simultaneous signals from the “character inputting keyswitch” (right) 13R and the “first position keyswitch (right)” 15R.

(51) A circuit 123 for inputting a character “.” which is connected to the “analog-digital conversion unit” 24 through an “AND gate” 122 which outputs only in case of receiving simultaneous signals from the “character inputting keyswitch” (right) 13R and the “third position keyswitch” 16.

(52) A circuit 127 for inputting a character “L” which is connected to the “analog-digital conversion unit” 24 through an “AND gate” 126 which outputs only in case of receiving simultaneous signals from the “character inputting keyswitch” (right) 13R and the “first position keyswitch” (left) 15L.

(53) A circuit 129 for inputting a character “O” which is connected to the “analog-digital conversion unit” 24 through “AND gates” 124 and 128 which output only in case of receiving simultaneous signals from the “character inputting keyswitch” (right) 13R and the “first position keyswitches” (left and right) 15L and 15R.

(54) A circuit 131 for inputting a character “"” which is connected to the “analog-digital conversion unit” 24 through “AND gates” 122 and 130 which output only in case of receiving simultaneous signals from the "character inputting keyswitch" (right) 13R, the "third position keyswitch" 16 and the "first position keyswitch" (left) 15L.

(55) A circuit 133 for inputting a character "-" which is connected between the "character inputting keyswitch" (right) 14R and the "analog-digital conversion unit" 24 through a "latch circuit" 132.

(56) A circuit 137 for inputting a character "p" which is connected to the "anaog-digital conversion unit" 24 through an "AND gate" 136 which outputs only in case of receiving simultaneous signals from the "character inputting keyswitch" (right) 14R and the "first position keyswitch" (right) 15R.

(57) A circuit 135 for inputting a character "?" which is connected to the "analog-digital conversion unit" 24 through an "AND gate" 134 which outputs only in case of receiving simultaneous signals from the "character inputting keyswitch" (right) 14R and the "third position keyswitch" 16.

(58) A circuit 139 for inputting a character ";" which is connected to the "analog-digital conversion unit" 24 through an "AND gate 138" which outputs only in case of receiving simultaneous signals from the "character inputting keyswitch" (right) 14R and the "first position keyswitch" (left) 15L.

(59) A circuit 141 for inputting a character "P" which is connected to the "analog-digital conversion unit"24 through "AND gates"136 and 140 which output only in case of receiving simultaneous signals from the "character inputting keyswitch"(right)14R and the "first position keyswitches"(left and right) 15L and 15R.

(60) A circuit 143 for inputting a character "!" which is connected to the "analog-digital conversion unit"24 through "AND gates"134 and 142 which output only in case of receiving simultaneous signals from the "character inputting keyswitch"(right)14R, the "third position keyswitch"16 and the "first position keyswitch"(left) 15L.

(61) A circuit 145 for tabulating which is connected between the "first position keyswitch"(left) 15L and the "analog-digital conversion unit"24 through a "latch circuit" 144.

(62) A circuit 147 for a changeover for numerals and symbols which is connected between the "third position keyswitch" 16 and the "analog-digital conversion unit"24 through a "latch circuit" 146.

and

(63) A circuit 149 for spacing which is connected between the "first position keyswitch"(right) 15R and the "analog-digital conversion unit" 24 through a "latch circuit" 148.

In the composition above mentioned, the characters "a", "s", "d", "f", "g", "h", "j", "k", "l", and "–" can be inputted by operating the "character inputting keyswitches" (left and right) 5L, 6L, 7L, 8L, 9L, 10R, 11R, 12R, 13R and 14R, respectively.

The characters "q", "w", "e", "r", "t", "y", "u", "i", "o" and "p" can be inputted by simultaneous operations of;

(i) some one of the "character inputting keyswitches" (left) 5L, 6L, 7L, 8L and 9L and the "first position keyswitch" (left) 15L

or

(ii) some one of the "character inputting keyswitches" (right) 10R, 11R, 12R, 13R and 14R and the "first position keyswitch" (right) 15R.

The characters "z", "x", "c", "v", "b", "n", "m", ",", "." and "?" can be inputted by simultaneous operations of;

(iii) some one of the "character inputting keyswitches" (left) 5L, 6L, 7L, 8L and 9L and the "third position keyswitch" 16

or

(iv) some one of the "character inputting keyswitches" (right) 10R, 11R, 12R, 13R and 14R and the "third position keyswith" 16.

The characters "A", "S", "D", "F", "G", "H", "J", "K", "L" and ":" can be inputted by simultaneous operations of;

(v) some one of the “character inputting keyswitches” (left) 5L, 6L, 7L, 8L and 9L and the “first position keyswitch” (right) 15R

or

(vi) some one of the “character inputting keyswitches” (right) 10R, 11R, 12R, 13R and 14R and the “first position keyswitch” (left) 15L.

The characters “Q”, “W”, “E”, “R”, “T”, “Y”, “U”, “I”, “O” and “P” can be inputted by simultaneous operations of;

(vii) some one of the “character inputting keyswitches” (left) 5L, 6L, 7L, 8L and 9L and the “first position keyswitches” (left and right) 15L and 15R

or

(viii) some one of the “character inputting keyswitches” (right) 10R, 11R, 12R, 13R and 14R and the “first position keyswitches” (left and right) 15L and 15R.

The characters “Z”, “X”, “C”, “V”, “B”, “N”, “M”, “’”, “”” and “!” can be inputted by simultaneous operations of;

(ix) some one of the “character inputting keyswitches” (left) 5L, 6L, 7L, 8L and 9L, the “third position keyswitch” 16 and the “first position keyswitch” (right) 15R

or

(x) some one of the “character inputting keyswitches” (right) 10R, 11R, 12R, 13R and 14R, the “third position keyswitch” 16 and the "first position keyswitch" (left) 15L.

Tabulating can be executed by single operation of the "first position keyswitch" (left) 15L.

Changeover for numerals and symbols can be executed by single operation of the "third position keyswitch" 16. The numeral and the symbols printed in a row on the surface of each of the "character inputting keyswitches" (left and right) 5L, 6L, 7L, 8L, 9L, 10R, 11R, 12R, 13R and 14R can be inputted by the same way as the aforesaid key operation.

Spacing can be executed by single operation of the "first position keyswitch" (right) 15R.

Further some one of tabulating, spacing and changeover for numerals and symbols can be set voluntarily on the "first position keyswitches" (left and right) 15L and 15R and the "third position keyswitch" 16.

Now the different embodiments of the invention shown in Figures 4 to 8 inclusive will be explained. In the explanations of these embodiments, the same component parts as the aforesaid embodiments of the invention will be affixed with the same symbol so that the overlapped explanations of the same component parts will be omitted.

In the embodiment shown in Fig. 4, what differs from the aforesaid embodiment of the invention is to locate the "first position" 2, the "second position" 3 and the "third position" 4 of the "character inputting keyswitches" (left and right) 5L, 6L, 7L, 8L, 9L, 10R, 11R, 12R, 13R and 14R in the left position, the middle position and the right position on the top surface of each of the "character inputting keyswitches". Even in such a composition, the same function and effect can be obtained.

In the embodiment shown in Fig. 5, what differs from the aforesaid embodiment of the invention is to provide the "third position keyswitches" (left and right) 16L and 16R respectively. By this composition, the "third position keyswitch" increases by one in number and it means the increasing of one keyswitch which can be used as a "changeover keyswitch" such as a "line feed keyswitch", etc. in addition to the "spacing keyswitch", the tabulating keyswitch", the "changeover keyswitch for numerals and symbols", etc. by single operation.

In the embodiment shown in Fig. 6, what differs from the aforesaid embodiment of the invention is to locate the "first position" 2, the "second position" 3 and the "third position" 4 of the "character inputting keyswitches" (left and right) 5L, 6L, 7L, 8L, 9L, 10R, 11R, 12R, 13R and 14R in the upper and lower positions on the top surface and also on the front surface of each of the "character inputting eyswitches". Even in such a composition, the same function and effect can be obtained.

In the embodiment shown in Fig. 7, what differs from the aforesaid embodiment of the invention is to provide a "changeover keyswitch for capital letters" 150. It is also possible to provide the "changeover keyswitch for capital letters" 150 like this, and input capital letters by operation of the "changeover keyswitch for capital letters" 150..

In the embodiment shown in Fig. 8, what differs from the aforesaid embodiment shown in Fig. 6 is to locate the "first position" 2, the "second position" 3 of the "character inputting keyswitches" (left and right) 5L, 6L, 7L, 8L, 9L, 10R, 11R, 12R, 13R and 14R in the left and the right positions on the top surface of each of the "character inputting keyswitches". Even in such a composition, the same function and effect can be obtained.

In the aforesaid embodiments of the invention, the explanations are made for inputting English characters, however, the invention can be applied for not only English characters but also characters of the other languages consisting of not more the 30 characters in small letters such as French characters, German characters, Spanish characters, Italian characters, etc.

In the aforesaid embodiments, the explanations are made for the "character inputting keyswitches" (left and right) 5L, 6L, 7L, 8L, 9L, 10R, 11R, 12R, 13R and 14R on which English characters, numerals, symbols, etc. are printed. However the invention is applied not only for the above case but also for the case of no printing of such English characters, numerals, symbols, etc. And also characters for inputting which correspondto the keyswitches can be printed around each of the keyswitches.

As will be apparent from the aforesaid explanations, the invention has many effects as listed below.

(1) In comparison with the keyswitches heretofore in use, the quantities of the required keyswitches in the invention are only a third (13 keyswitches at a minimum) of the existing one, and it makes an "input control unit" in the invention so compact.

(2) As the quantities of the required keyswitches are quite a few, the reduction of the cost can be expected.

(3) As the quantities of the required keyswitches are quite a few and the keyswitches are arranged left and right, it is possible to operate the keyswitches (left) by the fingers of the left hand and also the keyswitches (right) by the fingers of the right hand. So the input operation can be made easily and tirelessly.

(4) As the input operation is not so complicated, it does not require so long period as before but requires extremely short period for the training of the input operation.

(5) It is possible to input small letters and capital letters without using the changeover keyswitch(es). In such a manner, it is possible to improve the input speed.

(6) As the quantities of the keyswitches are quite few, the errors in inputting are quite few accordingly.

Claims:

1. A keyboard apparatus adapted for two-handed operation for inputting selectively different characters to a character-user apparatus (18) from the keyboard, which comprises a lefthand group (5L-9L) and a righthand group (10R-14R) of character-inputting keyswitches, at least one lefthand character-selection keyswitch (15L), at least one righthand character-selection keyswitch (15R), and electrical circuitry (17) connected to said character-inputting and character-selection keyswitches (10-15) to produce said selectively different characters for inputting to the character-user apparatus (18) according to the operation of said keyswitches, the keyboard being adapted and arranged so that, in use:-

a) operation of any single one of the character-inputting key switches (5L-14R) with no simultaneous operation of any character-selection keyswitch (15L, R) produces a respective one of a first series of characters (a, s, d, f, g, h, j, k, l. -);

b) operation of any single one of the hefthand group (5L-9L) of character-inputting keyswitches with simultaneous operation only of said one lefthand character-selection keyswitch (15L) produces a respective one of a second series of characters (q, w, e, r, t);

c) operation of any single one of the righthand group (10R-14R) of character-inputting keyswitches with simultaneous operation only of said one righthand character-selection keyswitch (15R) produces a respective one of a third series of characters (y, u, i, o, p);

d) operation of any single one of the lefthand group (5L-9L) of character-inputting keyswitches with simultaneous operation only of said one righthand character-selection keyswitch (15R) produces a respective one of a fourth series of characters (A, S, D, F, G);

e) operation of any single one of the righthand group (10R-14R) of character-inputting keyswitches with simultaneous operation only of said one lefthand character-selection keyswitch (15L) produces a respective one of a fifth series of characters (H, J, K, K, :);.

2. A keyboard apparatus as claimed in claim 1 wherein each group of character-inputting keyswitches (5L-9L, 10R-14R) is a row.

3. A keyboard apparatus as claimed in claim 2 wherein the lefthand row is in line with the righthand row.

4. A keyboard apparatus as claimed in claim 1, 2 or 3 wherein the character-selection keyswitches (15L, R) are below the respective groups of character-inputting keyswitches (5L-9L, 10R-14R).

5. A keyboard apparatus as claimed in any preceding claim wherein a further character-selection keyswitch (16) is provided such that, in use, operation of any single one of the character-inputting keyswitches (5L-14R) with simultaneous operation only of said further character-selection keyswitch (16) produces a respective one of a sixth series of characters (z, x, c, v, b, n, m,,,.,?).

6. A keyboard apparatus as claimed in claim 5 wherein, in use, operation of any single one of either group of character-inputting keyswitches (5L-14R) with simultaneous operation of both said further character-selection keyswitch (16) and a predetermined single one of said lefthand and righthand character-selection keyswitches (15L, R) produces a respective one of a seventh series of characters (Z, X, C, V, B, N, M).

7. A keyboard apparatus as claimed in claim 6 wherein the predetermined character-selection keyswitch is the righthand one (15R) for the lefthand group of character-inputting keyswitches (5L-9L) and the lefthand one (15L) for the righthand group (10R-14R) thereof.

8. A keyboard apparatus as claimed in claim 6 or 7 wherein said seventh series of characters comprise the capital letters Z, X, C, V, B, N and M.

9. A keyboard apparatus as claimed in any one of claims 5 to 8 wherein said sixth series of characters comprise the lower case letters z, x, c, v, b, n and m.

10. A keyboard apparatus as claimed in any preceding claim wherein of said characters the first series comprises the lower case letters a, s, d, f, g, h, j, k and l, the second and third series comprise the lower case letters q, w, e, r, t, y, u, i, o and p and the fourth and fifth series comprise the capital letters A, S, D, F, G, H, J, K and L.

11. A keyboard apparatus as claimed in any preceding claim wherein, in use, operation of any single one of said character-inputting keyswitches (5L-14R) with simultaneous operation only of both said lefthand and righthand character-selection keyswitches (15L, R) produces a respective one of an "eighth" series of characters (Q, W, E, R, T, Y, U, I, O, P).

12. A keyboard apparatus as claimed in claim 11 wherein said "eighth" series of characters comprise the capital letters Q, W, E, R, T, Y, U, I, O and P.

13. Apparatus for inputting characters, comprising five lefthand (5L-9L) and five righthand (10R-14R) "character inputting keyswitches" each representing a respective group of first, second and third characters in first, second and third positions respectively of the keyswitch, a "first position keyswitch" (left) (15L), a "first position keyswitch" (right) (15R), one or two "third position keyswitch(es) (16, L, R) and means (17) responsive to operation of said keyswitches to produce respective characters, the apparatus being adapted and arranged so that, in use, each of the following steps is possible:-

(i) inputting the character in the "second position" of each "character inputting keyswitch" respectively by a single operation of said "character inputting keyswitch";

(ii) inputting the character in the "first position" of each of said "character inputting keyswitches" respectively by simultaneous operations of the "character inputting keyswitch" (left) and the "first position keyswitch" (left) or simultaneous operations of the "character inputting keyswitch" (right) and the "first position keyswitch" (right); and

(iii) inputting the character in the "third position" of each of said "character inputting keyswitches" respectively by simultaneous operations of said "character inputting keyswitch" (left) and either said one or one of said two "third position keyswitch(es)" or simultaneous operations of said "character inputting keyswitch" (right) and either said one or one of said two "third position keyswitch(es)".

14.Apparatus as claimed in claim 13 wherein said "first position keyswitches" (left and right) are arranged respectively on the left and right below said "character inputting keyswitches" and said one or two "third position keyswitch(es)" is (are) arranged between said "first position keyswitches" (left and right).

15. Apparatus as claimed in claim 13 or 14 wherein said "first position" said "second position" and said "third position" of each of said "character inputting keyswitches" are located in the upper position, the middle position and the lower position on the top surface of each of said "character inputting keyswitches".

16. Apparatus as claimed in claim 13 or 14 wherein said "first position" said "second position" and said "third position" of each of said "character inputting keyswitches" are located in the left position, the middle position and the right position on the top surface of each of said "character inputting keyswitches".

17. Apparatus as claimed in claim 13 or 14 wherein said "first position" said "second position" and said "third position" of each of said "character inputting keyswitches" are located in the upper position and the lower position of the top surface and on the front surface of each of said "character inputting keyswitches".

18. Apparatus as claimed in claim 13 or 14 wherein said "first position" said "second position" and said "third position" of each of said "character inputting keyswitches" are located in the left position and right position of the top surface and on the front surface of each of said "character inputting keyswitches".

19. Apparatus as claimed in any one of claims 13 to 18 wherein an English character and a numeral or symbol are printed in a row in said "first position", said "second position" and said "third position" of each of said "character inputting keyswitches".

20. Apparatus as claimed in any one of claims 13 to 19 adapted so that, in use, at least one changeover such as tabulating, line feed, changeover for a numeral or a symbol, spacing, etc. can be inputted by operation of said "first position keyswitches" (left and right).

21. Apparatus as claimed in any one of claims 13 to 20 wherein said one "third position keyswitch" is a keyswitch extending over both the left side and the right side.

22. Apparatus as claimed in any one of claims 13 to 20 wherein said two "third position keyswitches" are located respectively on the left and right.

23. Apparatus as claimed in any one of claims 13 to 22 wherein at least one changeover such as tabulating, line feed, changeover for a numeral or a symbol, spacing, etc. can be inputted by operation of said "third position keyswitch(es)".

24. Apparatus as claimed in any one of claims 13 to 23 wherein said "character inputting keyswitches" are arranged in a row or in arc shape appropriate for the configuration of finger tips at the left and right sides.

25. Apparatus as claimed in any one of claims 13 to 24 wherein said "first position keyswitches" (left and right) and said "third position keyswitch(es)" are arranged in a row.

26. Keyswitch apparatus comprising:-

(i) "character inputting keyswitches" used for inputting English characters, etc., numerals, symbols and the like which are arranged by fives parting left and right and also on each of which a "first position", a "second position" and a "third position" are located;

(ii) "first position keyswitches" (left and right) used for inputting characters, etc. in said "first position" of each of said "character inputting keyswitches" arranged respectively left and right below the said "character inputting keyswitches"; and

(iii) one or two "third position keyswitch(es)" used for inputting a character, etc. in said "third position" of each of said "character inputting keyswitches" which is/are arranged between said "first position keyswitches" (left and right), so that it is possible;

(I) to input a small letter, etc. in said "second position" of each of said "character inputting keyswitches" respectively by single operation of said "character inputting keyswitch";

(II) to input a small letter, etc. in said "first position" of each of said "character inputting keyswitches" respectively by simultaneous operations of said "character inputting keyswitch" (left) and said "first position keyswitch" (left) or simultaneous operations of said "character inputting keyswitch" (right) and said "first position keyswitch" (right);

(III) to input a small letter, etc. in said "third position" of each of said "character inputting keyswitches" respectively by simultaneous operations of said "character inputting keyswitch" (left) and said one or one of two "third position keyswitch(es)" or simultaneous operations of said "character inputting keyswitch" (right) and said one or one of two "third position keyswitch(es)";

(IV) to input a capital letter, etc. in said "second position" of each of said "character inputting keyswitches" respectively by simultaneous operations of said "character inputting keyswitch" (left) and said "first position keyswitch" (right) or simultaneous operations of said "character inputting keyswitch" (right) and said "first position keyswitch" (left);

(V) to input a capital letter, etc. in said "first position" of each of said "character inputting keyswitches" respectively by simultaneous operations of three keyswitches i.e. said "character inputting keyswitch" (left) and said two "first position keyswitches" (left and right) or simultaneous operations of three keyswitches i.e. said "character inputting keyswitch" (right) and said two "first position keyswitches" (left and right); and

(VI) to input a capital letter, etc. in said "third position" of each of said "character inputting keyswitches" respectively by simultaneous operations of three keyswitches i.e. said "character inputting keyswitch" (left), said one or one of two "third position keyswitch(es)" and said "first position keyswitch" (right) or simultaneous operations of three keyswitches i.e. said "character inputting keyswitch" (right), said one or one of two "third position keyswitch(es)" and said "first position keyswitch" (left).

27. A method of inputting characters which comprises:

(i) inputting a character, etc. in a "second position" of each of at least some "character inputting keyswitches" (5L-14R) respectively by single operation of said "character inputting keyswitch";

(ii) inputting a character, etc. in a "first position" of each of at least some "character inputting keyswitches" (5L-14R) respectively by simultaneous operations of a "character inputting keyswitch" (left) (5L-9L) and a "first position keyswitch" (left) (15L) or simultaneous operations of a "character inputting keyswitch" (right) (10R-14R) and a "first position keyswitch" (right) (15R); and

(iii) inputting a character, etc. in a "third position" of each of at least some "character inputting keyswitches" (5L-14R) respectively by simultaneous operations of said "character inputting keyswitch" (left) (5L-9L) and one or one of two "third positions keyswitch(es)" (16, 16L, R) or simultaneous operations of said "character inputting keyswitch" (right) (10R-14R) and said one or one of two "third position keyswitch(es) (16, 16L, R), using an apparatus as claimed in any one of claims 13 to 26.

28. A method of inputting characters as claimed in claim 27, wherein at least one changeover such as tabulating, line feed, changeover for a numeral or a symbol, spacing, is inputted by single operation of said "first position keyswitches" (left and right) (15L, R) using an apparatus as claimed in claim 19.

29. A method of inputting characters as claimed in claim 27, wherein at least one changeover such as tabulating, line feed, changeover for a numeral or a symbol, spacing is inputted by single operation of said "third position keyswitch(es)", using an apparatus as claimed in claim 22.

30. A method of inputting characters as claimed in claim 27, comprising the steps of:-

(I) inputting a small letter in said "second position" of each of at least some "character inputting keyswitches" (5L-14R) respectively by single operation of said "character inputting keyswitch";

(II) inputting a small letter, etc. in said "first position" of each of at least some "character inputting keyswitches" (5L-14R) respectively by simultaneous operations of said "character inputting keyswitch" (left) (5L-9L) and said "first position keyswitch"

(left) (15L) or simultaneous operations of said "character inputting keyswitch" (right) (10R-14R) and said "first position keyswitch" (right) (15R);

(III) inputting a small letter in said "third position" of each of at least some "character inputting keyswitches" (5L-14R) respectively by simultaneous operations of said "character inputting keyswithc" (left) (5L-9L) and said one or one of two "third position keyswitch(es)" (16, 16L) or simultaneous operations of said "character inputting keyswitch" (right) (10R-14R) and said one or one of two "third position keyswitch(es)" (16, 16R);

(IV) inputting a capital letter in said "second position" of each of at least some character inputting keyswitches" (5L-14R) respectively by simultaneous operations of said "character inputting keyswitch" (left) (5L-9L) and said "first position keyswitch" (right) (15R) or simultaneous operations of said "character inputting keyswitch" (right) (10R-14R) and said "first position keyswitch" (left) (15L);

(V) inputting a capital letter in said "first position" of each of at least some character inputting keyswitches" (5L-14R) respectively by simultaneous operations of three keyswitches i.e. said "character inputting keyswitch" (left or right) (5L-14R) and said two "first position keyswitches" (left and right) (15L, R)and;

(VI) inputting a capital letter in said "third position" of each of at least some "character inputting keyswitches" respectively by simultaneous operations of three keyswitches i.e. said "character inputting keyswitch" (left) (5L-9L), said one or one of two "third position keyswitch(es)" (16, 16L, R) and said "first position keyswitch" (right) (15R) or simultaneous operations of three keyswitches i.e. said "character inputting keyswitch" (right) (10R-14R), said one or one of two "third position keyswitch(es)" (16, 16L, R) and said "first position keyswitch" (left) (15L).

Fig. 1

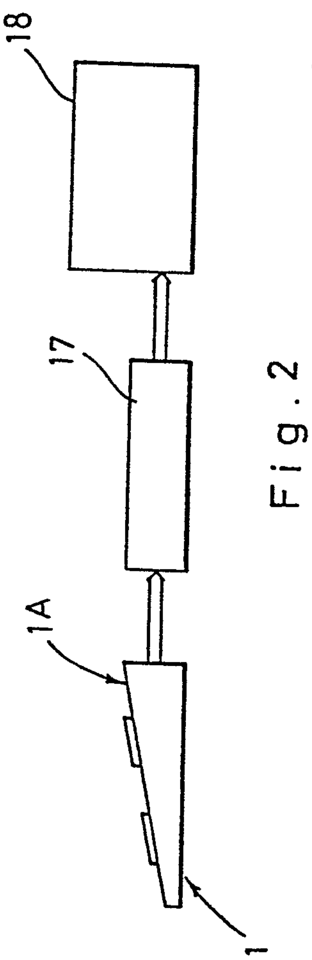


Fig. 2

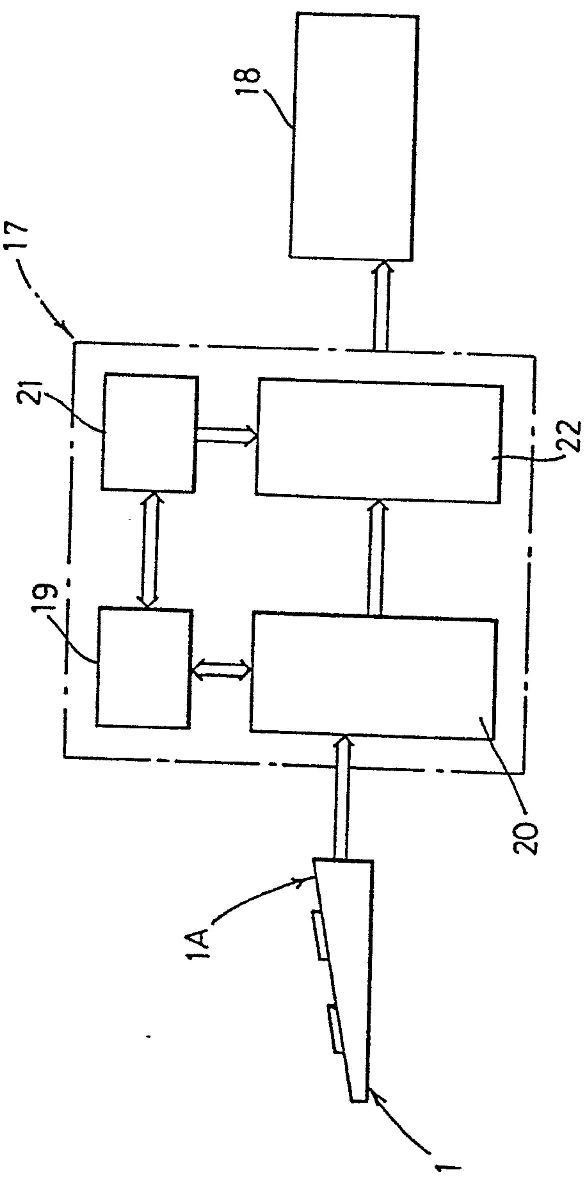

0129996

2/5

Fig. 3

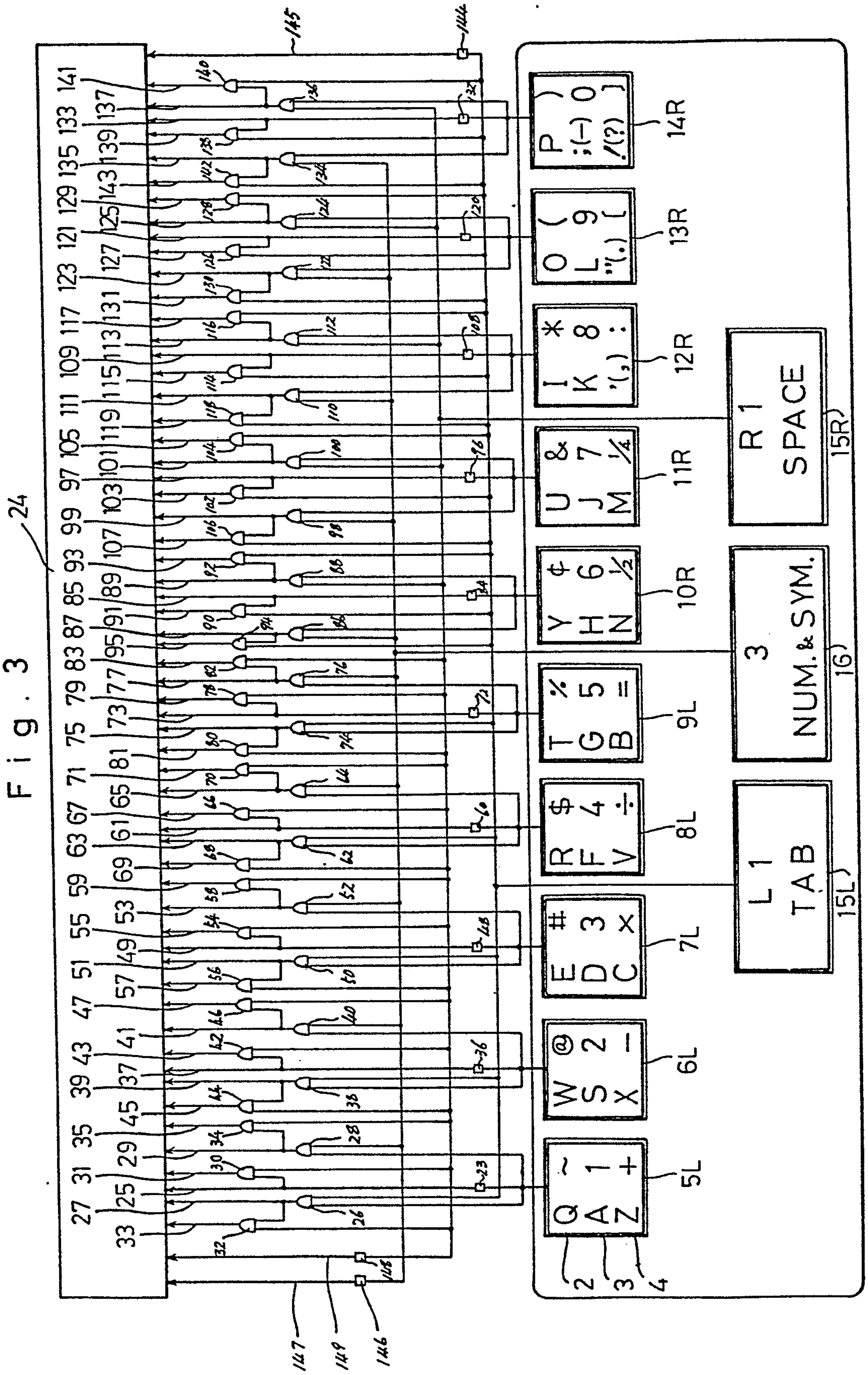

3/5

0129996

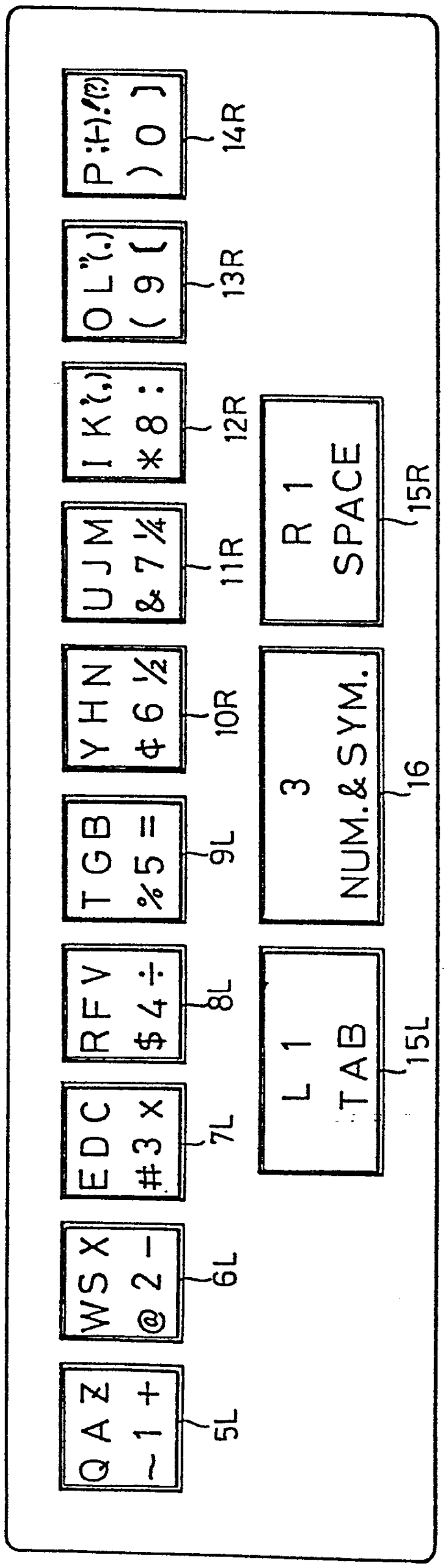


Fig. 4

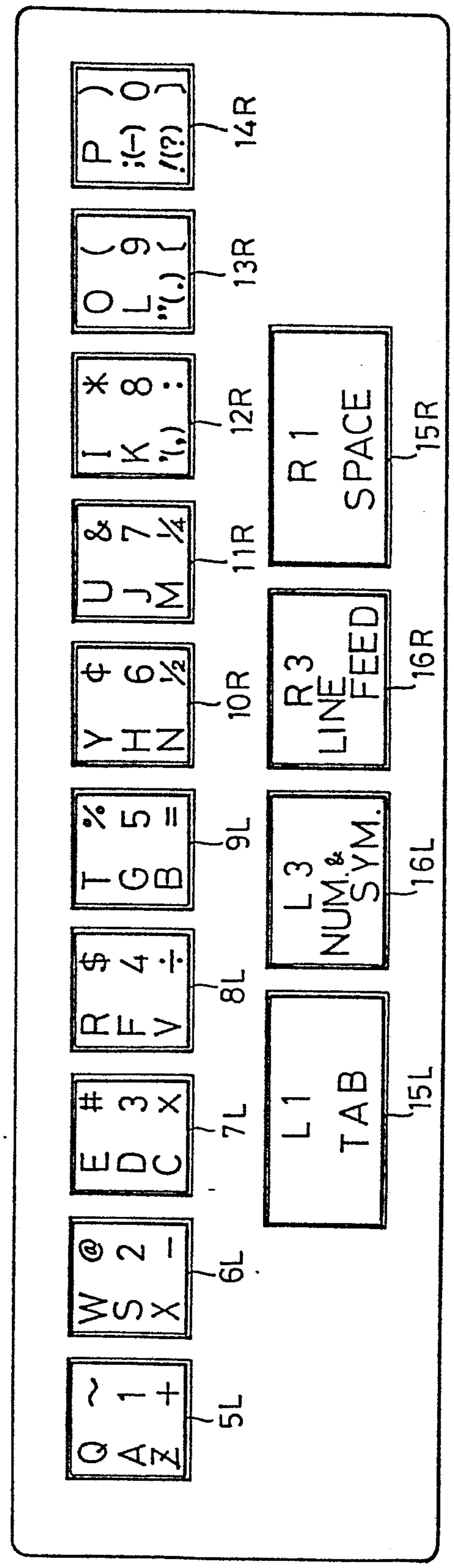


Fig. 5

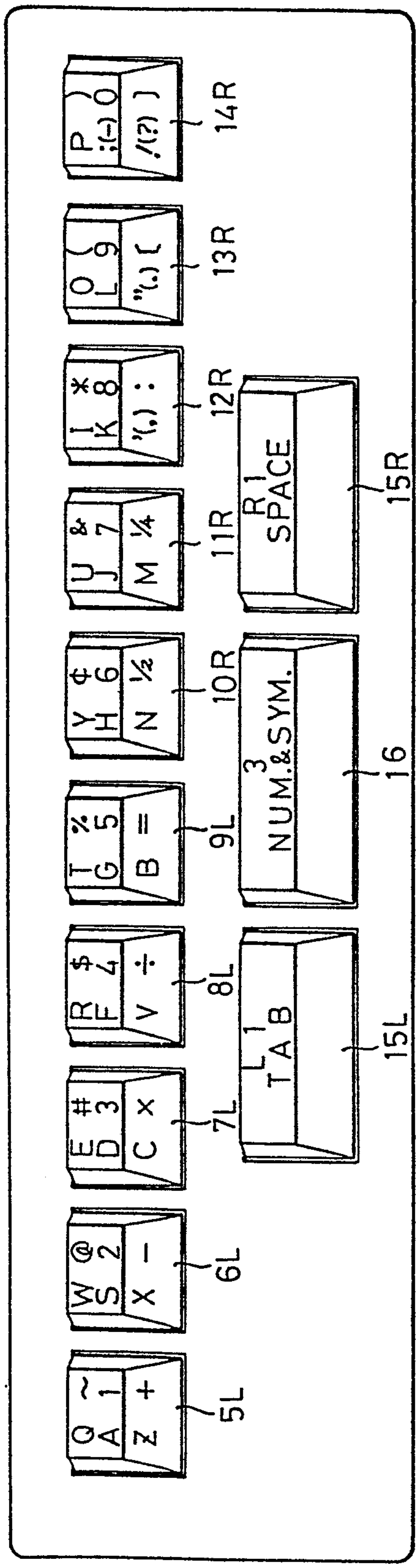
5L
6L
7L
8L
9L
10R
11R
12R
13R
14R
L 1 TAB
15L
3 NUM.& SYM.
16
R 1 SPACE
15R

Fig. 6

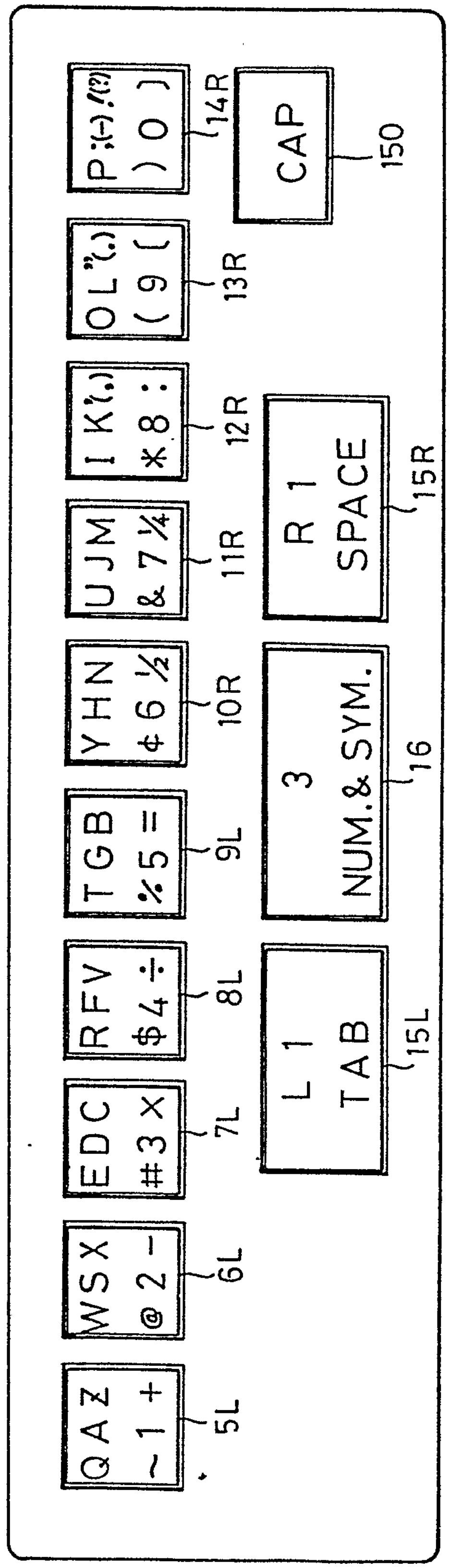
5L
6L
7L
8L
9L
10R
11R
12R
13R
14R
L 1 TAB
15L
3 NUM.& SYM.
16
R 1 SPACE
15R
CAP
150

Fig. 7

Fig. 8

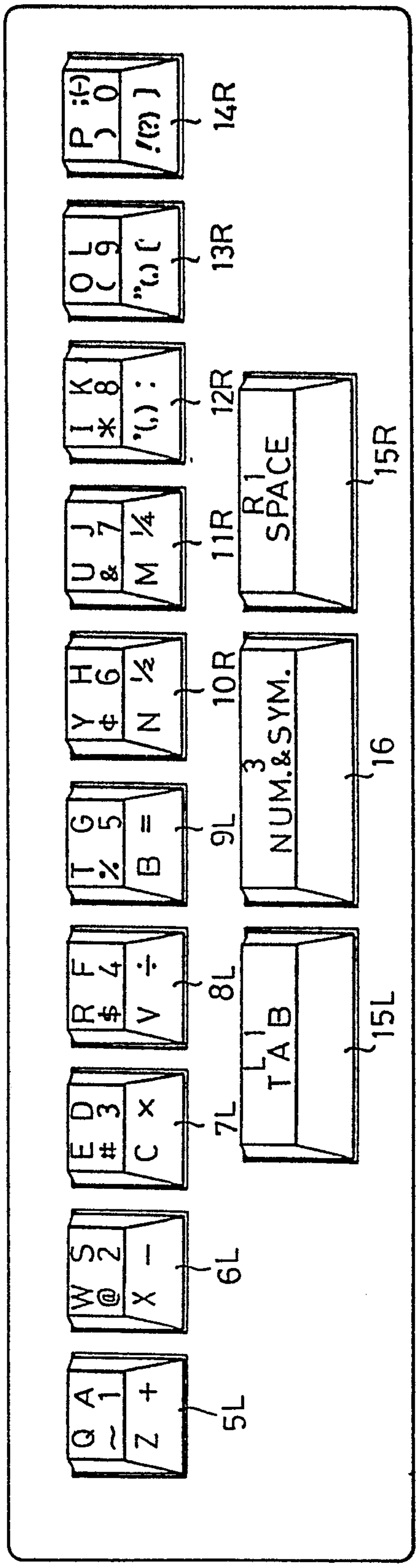
5L
6L
7L
8L
9L
10R
11R
12R
13R
14R
15L
15R
16
L1
TAB
3
NUM.&SYM.
R1
SPACE